# EUROPÄISCHE PATENTSCHRIFT

(11) **EP 0 711 388 B1**
(45) Veröffentlichungstag und Bekanntmachung des Hinweises auf die Patenterteilung: **05.03.1997**
(21) Anmeldenummer: 94922820.9
(22) Anmeldetag: 26.07.1994
(51) Int. Cl.: F16G 13/16

(54) **ENERGIEFÜHRUNGSKETTE**
ENERGY TRANSMISSION CHAIN
CHAINE DE TRANSMISSION D'ENERGIE

(30) Priorität: 28.07.1993 DE 4325259
(43) Veröffentlichungstag der Anmeldung: 15.05.1996
(73) Patentinhaber: IGUS SPRITZGUSSTEILE FÜR DIE INDUSTRIE GmbH, D-51147 Köln (DE)
(72) Erfinder: BLASE, Günter, D-51429 Bergisch Gladbach (DE)
(74) Vertreter: Stachow, E.-W., Prof. Dr.
(86) Internationale Anmeldenummer: DE9400868
(87) Internationale Veröffentlichungsnummer: WO9504231

(56) Entgegenhaltungen:
- DE-A- 2 415 374
- DE-A- 2 728 442
- DE-A- 3 431 531
- DE-A- 3 531 066
- DE-A- 3 929 095
- GB-A- 1 194 161

## Beschreibung

Die Erfindung betrifft eine Energieführungskette zur Führung von Kabeln, Schläuchen oder dergleichen mit mehreren durch obere und untere Querstege lösbar verbindbaren Kettenlaschen, die in zwei parallelen Strängen zusammengesetzt sind und die sich gegenseitig überlappen sowie abwinkelbar sind, wobei der im Bereich der gegenseitigen Überlappung innen angeordnete Teil der Kettenlasche an seiner außenliegenden Seite jeweils einen vorstehenden Zapfen aufweist, der in eine auf der innenliegenden Seite des außen angeordneten Teils der Kettenlasche vorgesehene kreisförmige Vertiefung eingreift, und etwa auf der halben Teilungslänge der Kettenlaschen nach innen gerichtete Ansätze zur Aufnahme der Querstege vorgesehen sind.

Eine derartige Energieführungskette ist zum Beispiel aus der DE-A-39 29 095 bekannt. Bei dieser Kette sind die beiden Bereiche einer Kettenlasche, die jeweils zur Überlappung mit einer benachbarten Kettenlasche vorgesehen sind, gegeneinander versetzt bzw. vorspringend angeordnet. Die Kettenlaschen sind in etwa auf der halben Teilungslänge des Kettengliedes gekröpft. Die durch die Kröpfung ermöglichte Verschränkung der Kettenglieder miteinander ist maßgeblich verantwortlich für den stabilen Zusammenhalt des Kettenstranges.

Die Einzelteile einer solchen Energieführungskette werden einstückig aus thermoplastischem Material gespritzt. Infolge der durch die Kröpfung komplizierten Form sind die Spritzwerkzeuge zur Herstellung der Kettenglieder verhältnismäßig teuer. Ein weiterer Nachteil der gekröpften Kettenlaschen besteht darin, daß im Zuge des Formungsprozesses, insbesondere beim Abkühlen in der Spritzgußform, Verwindungen und Verbiegungen insbesondere im Bereich der Kröpfung auftreten. Diese sind insbesondere bei großflächigeren und dickeren Teilen schwierig zu kontrollieren. Da zur Herstellung der gegenüberliegenden Kettenlaschen verschiedene Spritzgußformen verwendet werden müssen, sind die Verwindungen und Verbiegungen auf beiden Seiten der Kette unterschiedlich. Dies führt über die gesamte Länge der Energieführungskette zu Ungenauigkeiten und zu Instabilität. Schließlich ist es bei gekröpften Seitenlaschen auch nachteilig, daß bei Kraftaufnahme der Kette in Zugrichtung die Kräfte im Bereich der Kröpfung umgeleitet werden und diese eine Schwachstelle für die Stabilität der Kette darstellt.

Aufgabe der vorliegenden Erfindung ist es daher, eine Energieführungskette der eingangs genannten Art zu schaffen, die einfach und preisgünstig zu erstellen ist sowie in sich stabil und verwindungsfrei ist.

Die Aufgabe wird erfindungsgemäß dadurch gelöst, daß sich, in jedem Kettenstrang gegenüberliegend, jeweils Innen- mit Außenlaschen abwechseln, die sich in ihren Überlappungsbereichen bündig an die mittleren Bereiche anschließen, und an den Außenlaschen Querstege befestigt sind, die zumindest in ihren Endabschnitten so bemessen sind, daß sie den Überlappungsbereich der benachbarten Innenlaschen übergreifen und als Anschlag gegen eine Trennung der Kettenlaschen quer zur Laufrichtung wirken.

Aufgrund der erfindungsgemäßen Konstruktion besteht jeder Laschenstrang in vorteilhafter Weise aus sich abwechselnden Innen- und Außenlaschen, die sich gegenseitig überlappen, ohne daß Kröpfungen dazu erforderlich sind. Die an den Außenlaschen befestigten Querstege bilden eine Sicherung gegen die Trennung benachbarter Kettenlaschen quer zur Laufrichtung der Kette.

Ein weiterer Vorteil der erfindungsgemäßen Energieführungskette besteht darin, daß die beiden quer zur Laufrichtung der Kette gegenüberliegenden Innen- bzw. Außenlaschen in derselben Spritzgußform hergestellt werden können. Etwaige im Zuge des Formungsprozesses entstandene Verbiegungen sind daher identisch und bezüglich der zu den Laschen parallelen axialen Mittelebene symmetrisch. Dies führt über die gesamte Länge der Energieführungskette zu einer überraschend genauen und stabilen Ausrichtung der Kette. Da Kröpfungen nicht mehr erforderlich sind, kann die Gestalt der Innen- und Außenlaschen so gewählt werden, daß Verbiegungen im Zuge des Formungsprozesses ohnehin auf ein Minimum reduziert werden.

Da verhältnismäßig einfache Spritzgußformen zur Herstellung der Laschen verwendet werden können, ermöglicht die Erfindung insgesamt eine einfach und preisgünstig zu erstellende Energieführungskette, die in sich stabil und verwindungsfrei ist.

Eine Energieführungskette, bei der sich, in jedem Kettenstrang gegenüberliegend, jeweils Innen- mit Außenlaschen abwechseln, ist zwar aus GB-A-1 194 161 schon bekannt. Die plattenförmigen Kettenlaschen, die üblicherweise aus gestanzten Blechteilen bestehen, weisen an ihren beiden Enden Bohrungen auf, durch die sie über Schrauben und Bolzen gelenkig miteinander verbunden sind. Aufgrund dieser zusätzlichen Verbindungsmittel können die Laschen jedoch nur mit Hilfe von Werkzeugen aneinander befestigt und voneinander getrennt werden. Demgegenüber basiert die erfindungsgemäße Energieführungskette auf einem ganz anderen Verbindungsprinzip, das eine einfache und preisgünstige Erstellung der Kette sowie deren Stabilität und Verwindungsfreiheit gewährleistet.

In einer bevorzugten Ausführung der Erfindung sind die Kettenlaschen wenigstens bezüglich der senkrecht zur Längsachse der Kette durch die Mitte der Kettenlasche verlaufende Ebene spiegelsymmetrisch ausgebildet.

Bei einer Weiterbildung der Erfindung, bei der die Kettenlaschen im Bereich ihrer gegenseitigen Überlappung zueinander komplementäre Führungsrippen und Führungsausnehmungen aufweisen, wobei die Führungsrippen Anschlagflächen und die Führungsausnehmungen Anschläge zur Winkelbegrenzung aufweisen, sind die Anschläge und die Anschlagflächen jeweils mit einer leichten Hinterschneidung versehen. Die Hinterschneidung bewirkt ein Ineinanderziehen der Führungsrippen und der Führungsausnehmungen bei Abwinklung und bei Belastung des Kettenstranges. Durch den Verbund aus Außenlaschen und Innenlaschen ist eine Verkrallung des Anschlags mit einem Anschlagstück, wie dies bisher im Stand der Technik gehandhabt wird, nicht mehr erforderlich.

Die Erfindung wird nachstehend anhand eines Ausführungsbeispieles unter Bezugnahme auf die zugehörige Zeichnung erläutert. Dabei zeigen:
- Figur 1: eine Draufsicht auf einen Abschnitt aus einer erfindungsgemäßen Energieführungskette,
- Figur 2: die Innenseite einer Innenlasche,
- Figur 3: die Außenseite einer Innenlasche,
- Figur 4: eine vergrößerte Teilschnittansicht entlang der Linie IV in Figur 3,
- Figur 5: eine Oberansicht einer Innenlasche,
- Figur 6: die Innenseite einer Außenlasche,

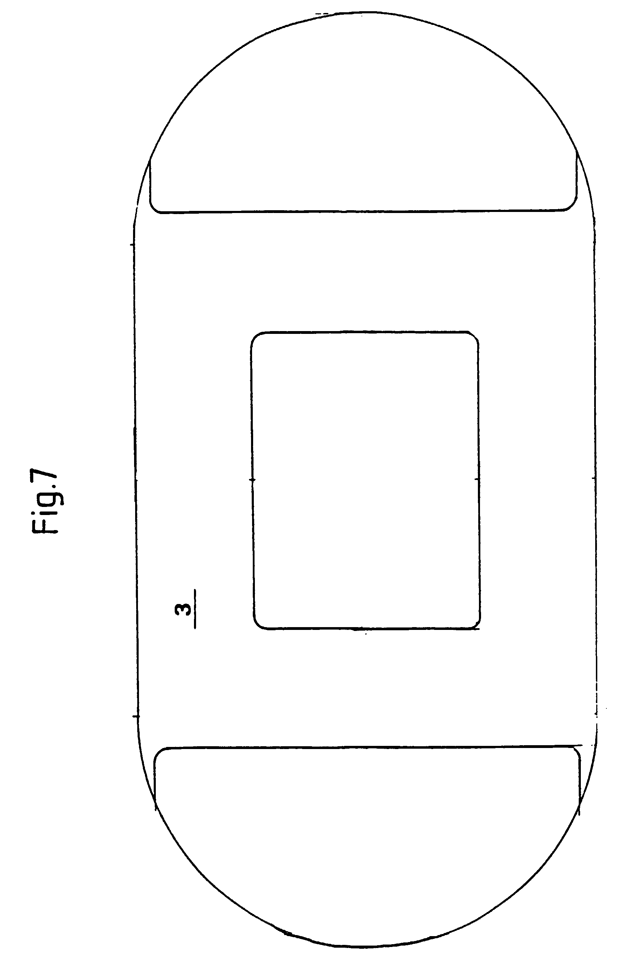

- Figur 7: die Außenseite einer Außenlasche und

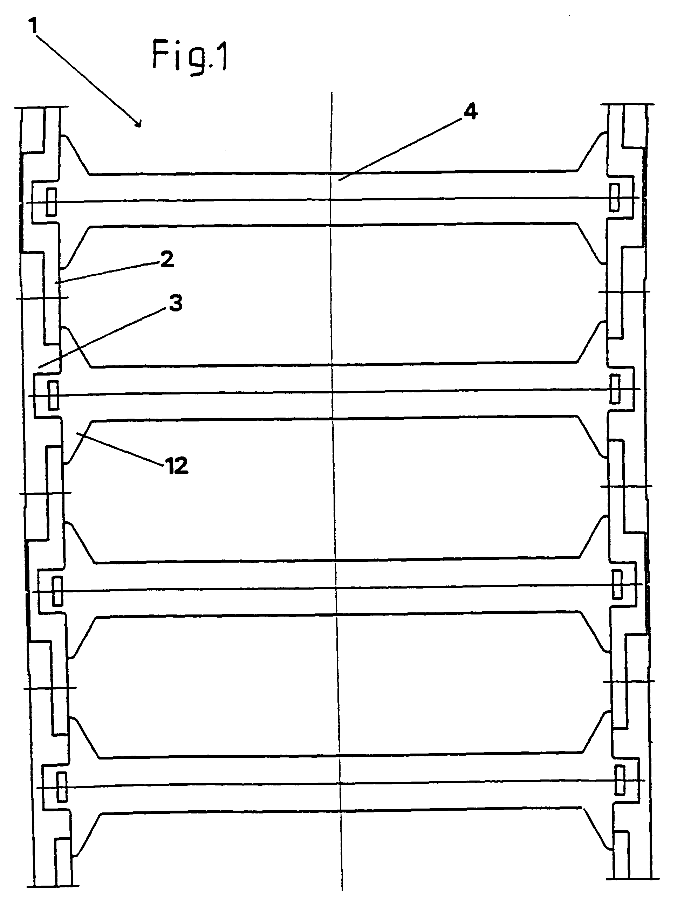

Wie aus der Zeichnung, insbesondere aus Figur 1, zu ersehen ist, besteht die erfindungsgemäße Energieführungskette 1 im wesentlichen aus den Seitenlaschen 2, 3 und den die Seitenlaschen 2, 3 zusammenhaltenden Querstegen 4. Die Innenlasche ist mit dem Bezugszeichen 2 und die Außenlasche mit dem Bezugszeichen 3 bezeichnet. Die Querstege 4 sind in an sich bekannter Art und Weise auf nach innen gerichtete Ansätze 5 der Kettenlaschen 2, 3 rastend aufschnappbar.

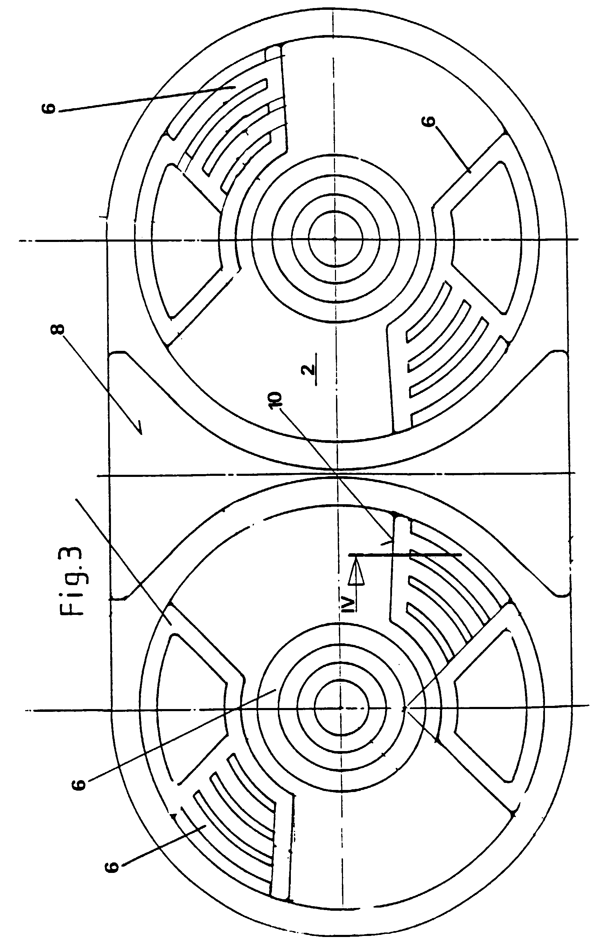

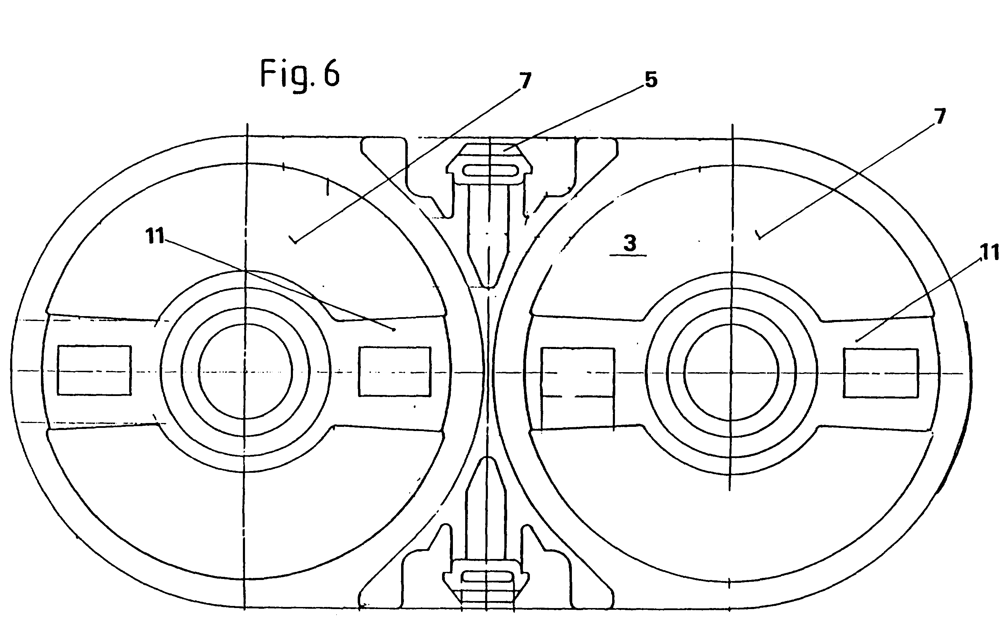

Wie aus den Figuren 3 und 6 zu entnehmen ist, ist die Innenlasche 2 auf ihrer Außenseite mit Führungsrippen 6 versehen, die zum formschlüssigen Eingriff in auf der Innenseite der Außenlasche 3 vorgesehenen Führungsausnehmungen 7 ausgebildet sind. Werden die Kettenlaschen 2, 3 zusammengesetzt, so wird eine Innenlasche 2 von jeweils zwei Außenlaschen 3 überlappt. Jedes Kettenglied überlappt dabei die unmittelbar benachbarten Kettenglieder 2, 3 auf der gleichen Seite. Dabei greifen die Führungsrippen 6 und die Führungsausnehmungen 7 so ineinander, daß eine begrenzte Schwenkbewegung der Kettenlaschen 2, 3 zueinander möglich ist. Sowohl die Innenlasche 2 als auch die Außenlasche 3 sind bezüglich zweier Symmetrieebenen spiegelbildlich ausgebildet. Dabei ist besonders wichtig, daß die Kettenlaschen 2, 3 bezüglich der sich senkrecht zur Längsachse der Energieführungskette in der Mitte der jeweiligen Kettenlaschen 2, 3 erstreckende Ebene spiegelsymmetrisch sind. Dies ermöglicht es, jede der Kettenlaschen 2, 3 auf jeder Seite der Energieführungskette 1 zu verwenden.

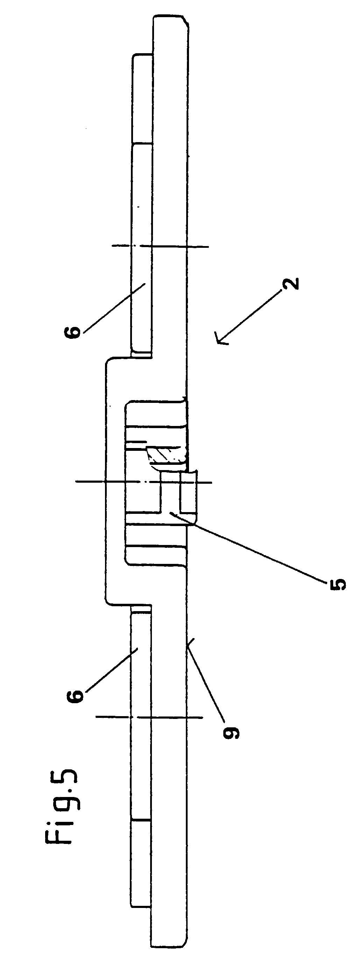

Wie aus Figur 5 zu ersehen ist, erstrecken sich die Bereiche einer Kettenlasche 2, 3, die zur Überlappung und gelenkigen Verbindung mit einer benachbarten Kettenlasche 2, 3 vorgesehen sind, in einer gemeinsamen Ebene. Diese gemeinsame Ebene bildet in etwa die Mittellängsebene der Kettenlaschen 2, 3.

In etwa auf der halben Teilungslänge der einstückig aus Kunststoff gespritzten Kettenlaschen 2, 3 ist ein Bereich größerer Dicke 8 vorgesehen. Dieser Bereich größerer Dicke 8 füllt bei der zusammengesetzten Energieführungskette 1 den Zwischenraum zwischen den sich gegenseitig überlappenden Kettenlaschen 2, 3.

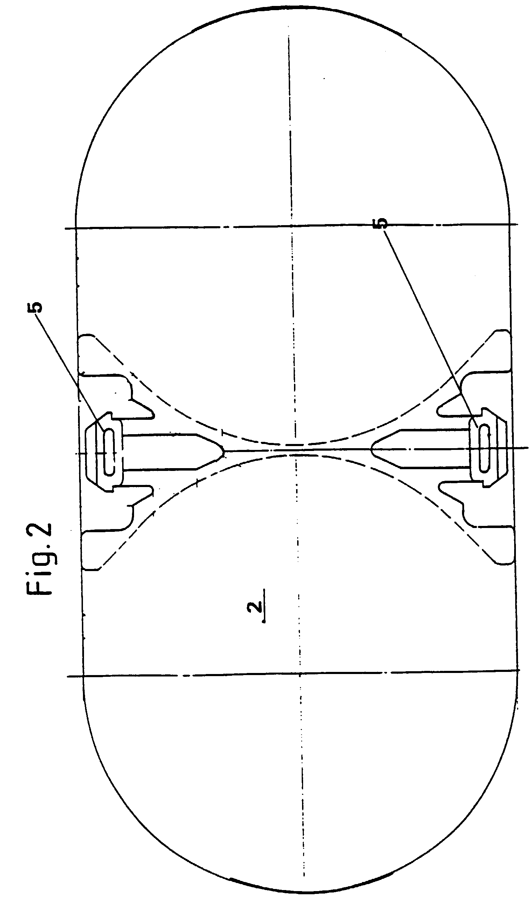

Wie aus den Figuren 2 und 5 zu ersehen ist, sind die Ansätze 5 in dem Bereich größerer Dicke 8 gegenüber der nach innen weisenden Fläche 9 der Kettenlasche 2, 3 zurückspringend angeordnet. Dies hat zum einen den Vorteil, daß die Querstege 4, die auf den Ansätzen 5 gelagert sind, höhere Kräfte aufnehmen können, und zum anderen ragen die Ansätze 5 nicht so weit in den Innenraum der Energieführungskette 1 hinein, so daß Schläuche und Kabel ungehinderter eingelegt werden können.

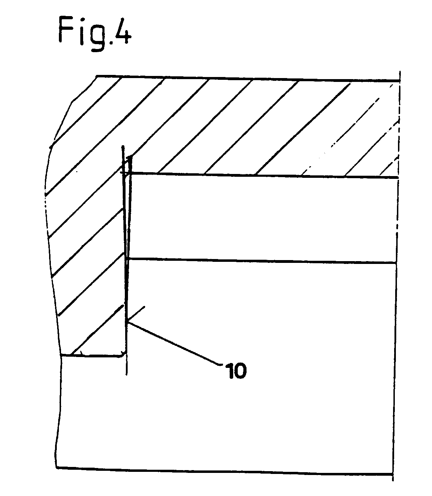

Zur Begrenzung der Verschwenkbarkeit der einzelnen Kettenlaschen zueinander sind die Innenlaschen 2 im Bereich der Führungsnuten 6 mit Anschlagflächen 10 versehen. Diese Anschlagflächen 10 stoßen gegen entsprechende Anschläge 11, die im Bereich der Führungsausnehmungen 7 der Außenlaschen 3 angeordnet sind. Wie aus der Schnittdarstellung in Figur 4 zu ersehen sind, sind die Anschlagflächen 10 geringfügig hinterschnitten. Eine solche Hinterschneidung ist ebenfalls bei den Anschlägen 11 vorgesehen. Bei Belastung der Kettenlaschen 2, 3 und gegenseitigem Verschwenken der Kettenlaschen 2, 3 bewirken die Hinterschneidungen ein Ineinanderziehen der Führungsrippen 6 und der Führungsausnehmungen 7.

Wie ferner aus Fig. 1 ersichtlich ist, weist der Quersteg 4 an seinen Enden flügelartige Verbreiterungen 12 auf. Diese Verbreiterungen 12 oder Verdickungen der Querstege 4 sind so gewählt, daß diese in die Überlappungsbereiche der Kettenlaschen 2, 3 hineinreichen. Wenn die Energieführungskette 1 zusammengesetzt wird, übergreifen die Querstege 4 zwei in gleicher Ebene angeordnete Kettenlaschen 2, 3, wodurch eine zusätzliche Sicherung des Laschenverbundes erzielt wird.

### Bezugszeichenliste

- 1: Energieführungskette
- 2: Innenlasche
- 3: Außenlasche
- 4: Quersteg
- 5: Ansätze
- 6: Führungsrippen
- 7: Führungsausnehmungen
- 8: Bereich größerer Dicke
- 9: nach innen weisende Fläche
- 10: Anschlagflächen
- 11: Anschläge
- 12: Verbreiterungen

## Patentansprüche

1. Energieführungskette (1) zur Führung von Kabeln, Schläuchen oder dergleichen mit mehreren durch obere und untere Querstege (4) lösbar verbindbaren Kettenlaschen (2, 3), die in zwei parallelen Strängen zusammengesetzt sind und die sich gegenseitig überlappen sowie abwinkelbar sind, wobei der im Bereich der gegenseitigen Überlappung innen angeordnete Teil der Kettenlasche (2, 3) an seiner außenliegenden Seite jeweils einen vorstehenden Zapfen aufweist, der in eine auf der innenliegenden Seite des außen angeordneten Teils der Kettenlasche vorgesehene kreisförmige Vertiefung eingreift, und etwa auf der halben Teilungslänge der Kettenlaschen (2, 3) nach innen gerichtete Ansätze (5) zur Aufnahme der Querstege (4) vorgesehen sind, **dadurch gekennzeichnet,** daß sich, in jedem Kettenstrang gegenüberliegend, jeweils Innen- mit Außenlaschen (2 bzw. 3) abwechseln, die sich in ihren Überlappungsbereichen bündig an die mittleren Bereiche (8) anschließen, und an den Außenlaschen (3) Querstege (4) befestigt sind, die zumindest in ihren Endabschnitten so bemessen sind, daß sie den Überlappungsbereich der benachbarten Innenlaschen (2) übergreifen und als Anschlag gegen eine Trennung der Kettenlaschen (2, 3) quer zur Laufrichtung wirken.

2. Energieführungskette nach Anspruch 1, **dadurch gekennzeichnet,** daß die Kettenlaschen (2, 3) wenigstens bezüglich der senkrecht zur Längsachse der Kette durch die Mitte der Kettenlasche (2, 3) verlaufende Ebene spiegelsymmetrisch ausgebildet sind.

3. Energieführungskette nach Anspruch 1 oder 2, bei welcher die Kettenlaschen (2, 3) im Bereich ihrer gegenseitigen Überlappung zueinander komplementäre Führungsrippen (6) und Führungsausnehmungen (7) aufweisen, wobei die Führungsrippen (6) Anschlagflächen (10) und die Führungsausnehmungen (7) mit diesen zusammenwirkende Anschläge (11) aufweisen, **dadurch gekennzeichnet,** daß die Anschläge (11) und die Anschlagflächen (10) jeweils eine leichte Hinterschneidung aufweisen.

## Claims

1. Power transmission chain (1) for guiding cables, hoses and the like, with several chain straps (2, 3) which can be connected in detachable fashion by upper and lower cross-members (4), which are assembled in two parallel strands and overlap each other and can be angled, where the part of the chain strap (2, 3) arranged on the inside in the area of the mutual overlap displays a protruding peg on its outer side which engages a circular recess located on the inner side of the outer part of the chain strap and inward-facing studs (5) are provided roughly halfway along the pitch length of the chain straps (2, 3) for receiving the cross-members (4), **characterised in that** inner and outer straps (2 and 3) alternate, lying opposite each other in each chain strand, which are positioned flush to the centre sections (8) in the areas of overlap and that cross-members (4) are attached to the outer straps (3) whose end sections at least are dimensioned in such a way that they overlap the overlap area of the adjacent inner straps (2) and act as a stop to prevent the chain straps (2, 3) separating transverse to the direction of travel.

2. Power transmission chain according to Claim 1, **characterised in that** the chain straps (2, 3) are designed mirror-symmetrically, at least in relation to the plane running through the centre of the chain strap (2, 3) perpendicularly to the longitudinal axis of the chain.

3. Power transmission chain according to Claim 1 or 2, in which the chain straps (2, 3) display matching guide ribs (6) and guide recesses (7) in the area of their mutual overlap, where the guide ribs (6) display stop faces (10) and the guide recesses (7) display the corresponding stops (11), **characterised in that** the stops (11) and stop faces (10) each display a slight undercut.

## Revendications

1. Chaîne de conduction d'énergie (1) pour le guidage de câbles, de tuyaux souples ou analogues, comportant plusieurs maillons (2, 3) pouvant être réunis, de façon séparable, au moyen de barrettes transversales (4) supérieures et inférieures, maillons qui sont assemblés en deux cordons parallèles et qui se chevauchent mutuellement et peuvent être orientés angulairement, la partie de chaque maillon (2, 3), disposée à l'intérieur dans la région du chevauchement mutuel, comportant alors, sur sa face tournée vers l'extérieur, un téton saillant, qui s'engage dans un renfoncement circulaire ménagé sur la face, tournée vers l'intérieur, de la partie du maillon disposée à l'extérieur, tandis que, sensiblement à la moitié de la longueur des maillons (2, 3), sont prévus des appendices (5) dirigés vers l'intérieur pour recevoir les barrettes transversales (4), caractérisée en ce que, dans chaque cordon de la chaîne, alternent chaque fois, en étant tournés l'un vers l'autre, un maillon intérieur (2) et un maillon extérieur (3), qui se raccordent dans leurs régions de chevauchement, en étant en affleurement avec les régions centrales (8), et en ce que, aux maillons extérieurs (3), sont fixées des barrettes transversales (4) qui, au moins dans leurs parties d'extrémité, sont dimensionnées de telle sorte qu'elles s'engagent par dessus la région de chevauchement des maillons intérieurs voisins (2) et agissent comme une butée s'opposant à une séparation des maillons (2, 3) dans une direction transversale à la direction de déplacement.

2. Chaîne de conduction d'énergie selon la revendication 1, caractérisée en ce que les maillons (2, 3) ont une configuration présentant une symétrie énantiomorphe, au moins par rapport au plan s'étendant perpendiculairement à l'axe longitudinal de la chaîne et passant par le milieu du maillon (2, 3).

3. Chaîne de conduction d'énergie selon la revendication 1 ou 2, dans laquelle les maillons (2, 3), dans la région de leur chevauchement mutuel, présentent des nervures de guidage (6) et des évidements de guidage (7) complémentaires de ces dernières, les nervures de guidage (6) présentant alors des surfaces de butée (10) et les évidements de guidage (7) , des butées (11) coopérant avec ces dernières, caractérisée en ce que les butées (11) et les surfaces de butée (10) présentent chacune une légère contre-dépouille.
